# EUROPÄISCHE PATENTSCHRIFT

(11) **EP 2 264 412 B1**
(45) Veröffentlichungstag und Bekanntmachung des Hinweises auf die Patenterteilung: **25.11.2015**
(21) Anmeldenummer: 10166208.8
(22) Anmeldetag: 16.06.2010
(51) Int. Cl.: G01G 19/44

(54) **Waage**
Scale
Balance

(30) Priorität: 18.06.2009 DE 102009029796
(43) Veröffentlichungstag der Anmeldung: 22.12.2010
(73) Patentinhaber: Leifheit AG, 56377 Nassau/Lahn (DE)
(72) Erfinder: Denk, Andre, 45131, Essen (DE); Moddick, Christian, 48317, Drensteinfurth (DE); Emter, Artjom, 56077, Koblenz (DE); Stange, Dr., Pedro, 65582, Diez (DE)
(74) Vertreter: Bungartz, Klaus Peter

(56) Entgegenhaltungen:
- DE-U1- 8 422 392
- US-A- 3 243 002
- US-A1- 2002 136 862

## Beschreibung

### Beschreibung

### Technisches Gebiet

Die Erfindung betrifft eine Waage mit einer die zu wiegende Last aufnehmenden Wiegefläche und einer zugeordneten Vorrichtung zur Bestimmung des Gewichtes der auf der Wiegefläche aufliegenden Last. Insbesondere betrifft die Erfindung eine Personenwaage, obwohl ihre Anwendung auf diesen speziellen Waagentyp nicht beschränkt ist. Ebenso können beispielsweise auch Küchen- oder Haushaltswaagen oder Briefwaagen erfindungsgemäß ausgebildet sein.

### Stand der Technik

Waagen mit den unterschiedlichsten Wiegeflächen sind allgemein bekannt. Der Waagenunterbau kann dabei ein Gehäuse sein, das die Elektronik aufnimmt. Alternativ kann die Waage auch unmittelbar auf drei oder bevorzugt vier Wägezellen aufstehen, wobei die Elektronik dann in einem Gehäuse einer Wägezelle oder isoliert unterhalb der Wiegeplatte, beispielsweise in einem mit dieser verklebten Gehäuse, angeordnet sind kann. Insbesondere im Bereich der Personenwaagen sind Waagen bekannt, die ein Wiegeflächen aus Metall, Glas oder Holz aufweisen. Es sind darüber hinaus auch Waagen bekannt, deren Wiegefläche mit einer Folie oder einem Gummibezug beklebt sind. Diese Waagen weisen meist mehrere der folgenden Nachteile auf.

Oft vermitteln die Materialien der Wiegeflächen, insbesondere wenn sie barfüßig betreten werden, ein unangenehmes, insbesondere hartes und kaltes Gefühl. Andere Wiegeflächen sind schlecht zu reinigen, beispielsweise solche aus Kork und solche mit Wollüberzug. Wiederum andere Wiegeflächen sind rutschig, insbesondere wenn sie nass sind oder mit nassen Füßen betreten werden. Wiegeflächen aus Glas haben den Nachteil, dass diese empfindlich sind und in viele kleine Teile zerspringen können, beispielsweise wenn Gegenstände auf sie fallen. Genauso sind die Ecken und Kanten der Glasplatten durch Stöße besonders bruchgefährdet, wie sie beim normalen Gebrauch auftreten.

Das Stehen auf der meist ebenen und harten Oberfläche wird oft als unangenehm empfunden. Die harte Oberfläche entsteht oft aus dem Bedürfnis einer flachen Waage eine ausreichende Stabilität zu geben. Häufig wird hier eine Glasplatte verwendet.

Solche Waagen, die eine sich angenehmer, weil thermisch isolierende Oberfläche aufweisen, sind als Analysewaagen ungeeignet, weil sie keine ausreichende elektrische Leitfähigkeit für BMI- oder BIA-Funktionen aufweisen.

Zur zumindest teilweisen Lösung dieses Problems ist in der DE 84 22 392 U1 eine Waage beschrieben, deren Wiegefläche mit einem Überzug versehen ist, der wiederum, nach oben und seitlich abstehend, Filamente aufweist, die die Oberfläche der Wiegefläche veredeln. Diese Filamente auf einen textilen Grundkörper aufgebracht und werden mit diesem über den Rand der Wiegefläche gezogen.

Der Überzug wiederum hat neben der Tatsache, dass mit ihm ein zusätzliches Bauteil erforderlich ist, den Nachteil, dass er oft als unschön empfunden wird. Ferner muss ein Rand der Waage vorhanden sein, der von dem Überzug hintergriffen werden kann, so dass dieser fest mit der Waage verbunden ist. Moderne Waagen werden aber immer flacher und weisen oft keinen solchen Rand mehr auf. Sofern dann der Überzug unter die Waage gezogen werden muss, steht diese auf dem Überzug, was zu einer ungleichmäßigen Belastung führt und das Wiegeergebnis verfälscht.

In Verbindung mit den Analysewaagen, die den elektrischen Widerstand des Körpers einer Person messen, hat der Überzug ferner den Nachteil, dass die elektrische Leitfähigkeit vom Körper über den Überzug zum Sensor der nicht hinreichend klar definiert ist, so dass eine zuverlässige Analyse, zum Beispiel des Körperfettanteils, nicht möglich ist.

Weitere Nachteile des Überzugs sind die Gefahr des Verrutschens, was zu einem unangenehmen Gefühl beim Betreten der Waage führt und die Tatsache, dass insbesondere der Seitenrand auf die Höhe der Waage abgestimmt sein muss, sofern der Überzug nicht Falten oder mit den oben bereits erwähnten Problemen weit unter die Unterseite der Waage gezogen werden soll.

Eine ähnliche Waage ist in der US 3, 243, 002 A beschrieben.

### Kurzbeschreibung der Erfindung

Es ist die Aufgabe der vorliegenden Erfindung, eine Waage zu schaffen, die neben der Möglichkeit einer leichten Reinigung auch die Möglichkeit bietet, das Empfinden beim Betreten und Stehen zu verbessern, die Rutschfestigkeit auf der Wiegefläche zu erhöhen, und der Wiegefläche einen verbesserten Oberflächenschutz zu bieten. Ferner soll die Eleganz und Gestaltungsfreiheit verbessert werden.

Die Aufgabe wird durch eine Waage gelöst, die dadurch gekennzeichnet ist, dass die Wiegefläche mit im Winkel zur Wiegefläche angeordneten Filamenten versehen ist. Die Filamente können rechtwinklig oder auch in einem anderen Winkel zur Wiegefläche angeordnet sein. Meist wird dies ein Winkel sein, der in etwa einem rechten Winkel entspricht, je nach Einsatz und Gestaltungszweck kann der Winkel aber auch deutlich geringer oder größer sein. Insbesondere an den Rändern oder Seiten der Waage, kann der Winkel auch an die Null Grad angenähert sein.

Die Erfindung hat den Vorteil, dass die mit den Filamenten versehene Wiegefläche eine deutliche reduzierte Wärmeleitung aufweist. Das Kältegefühl, das der Benutzer beim Betreten vieler handelsüblicher Waagen empfindet, ist wirksam vermieden. Durch die senkrecht stehenden Filamente kann die Wärmeleitung je nach Ausführung und Anordnungsdichte auf typischerweise 2/9, verglichen mit der vollflächigen Kontaktfläche aus demselben Material, reduziert werden. Selbst bei mechanischer Belastung, die vereinzelt zum vorübergehenden Umlegen der Filamente führen kann, erhöht sich die Wärmeleitung vorteilhafter Weise nur unwesentlich.

Die Erfindung hat den weiteren Vorteil, dass die mit den Filamenten versehene Wiegefläche deutlich weniger rutschig ist; diese insbesondere auch im nassen Zustand. Dies ist u.a. durch die Reibung der Filamente untereinander und durch die Biegemomente der einzelnen Filamente erklären. Ein Verhaken der Filamentspitzen am Fuß trägt hier auch zu bei.

Die Erfindung hat den weiteren Vorteil, dass die mit den Filamenten versehene Wiegefläche deutlich unempfindlicher gegen Beschädigungen, insbesondere Verkratzen und durch herabfallende Gegenstände, ist. Die Filamente wirken wie eine Druckfeder auf herab fallende Gegenstände und bremsen diese deutlich ab. Die Stärke eines Schlages wird durch Verlängerung des Bremsweges stark herabgesetzt.

Bei einer besonderen Ausführung ist vorgesehen, die Filamente aufgeklebt sind. Insbesondere kann vorgesehen sein, dass der Kleber auf der Wiegefläche eine vorzugsweise durchgängige Schicht bildet. Der Kleber, der die Filamente hält, kann vorteilhafter Weise im Falle eines Zerspringens der beispielsweise als Glasplatte ausgeführten Wiegefläche die einzelnen Teile der häufig vorgespannten Sicherheitsglasscheibe (Einscheibensicherheitsglas) zusammenhalten, damit sich nicht die vielen kleinen Glasstücke im Raum verteilen.

Die Erfindung hat den weiteren Vorteil, dass die mit den Filamenten versehene Wiegefläche die Nutzung der Waage als Fußbürste erlaubt. Beim Betreten der Waage und beim darauf Herumreiben mit den Füßen werden Schmutz und Hautreste ohne sich zu Bücken entfernt.

Besonders vorteilhaft, insbesondere auch im Hinblick auf die bereits genannten Vorteile, ist eine Ausführungsform, bei der die Filamente eine Länge im Bereich von 0,2 mm und 10 mm, insbesondere im Bereich von 0,2 mm bis 5 mm, insbesondere im Bereich von 1 mm bis 3 mm, aufweisen und bei der die Filamente einen Durchmesser im Bereich von 2 Mikrometer bis 50 Mikrometer, insbesondere im Bereich von 5 Mikrometer bis 20 Mikrometer aufweisen. Insbesondere ist von Vorteil, wenn die Massendichte der Filamente auf der Wiegefläche pro Millimeter Filamentlänge im Bereich von 50 g/m² und 200 g/m² liegt. Bei einer besonderen Ausführung beträgt sie 150 g/m².

Bei einer besonders harmonisch anmutenden Ausführung ist vorgesehen, dass die Filamente alle gleichlang sind. Hierdurch entsteht eine optisch einheitliche Gesamtoberfläche.

Bei vorteilhaften Ausführungen weisen die Filamente unterschiedlicher Stellen oder unterschiedlicher Bereiche unterschiedliche Längen und/oder unterschiedliche Durchmesser und/oder unterschiedliche Anordnungsdichten auf. Hierdurch können beispielsweise spezielle Bereiche der Wiegefläche, wie etwa eine Sollstandposition, wirksam markiert werden. Bei einer besonderen Ausführung ist vorgesehen, dass durch speziell gewählte Dichteverteilungen der Filamente sowie durch Verwendung verschiedener Durchmesser und Längen in unterschiedlichen Bereichen Profile auf der Oberfläche erzeugt werden, welche verschiedene Härten und Höhen an verschiedenen Stellen auf der Oberfläche aufweisen, mit dem sich auch Akupressur und Reflexzonenmassage durchführen lässt.

Die Filamente können vorteilhafter Weise aus unterschiedlichsten Materialien gefertigt sein. Auch ist es möglich Filamente unterschiedlicher Materialien in unterschiedlichen Bereichen der Wiegefläche aufzubringen oder Filamente unterschiedlicher Materialien homogen gemischt auf der Wiegefläche anzuordnen. Die Filamente können beispielsweise Kunstfasern sein und/oder aus Polyamid hergestellt sein und/oder aus Polyester hergestellt sein und/oder als Glasfasern ausgebildet sein.

Hinsichtlich des Materials der Wiegefläche gibt es prinzipiell keine Einschränkungen. Beispielsweise kann vorgesehen sein, dass die Wiegefläche aus Glas besteht und/oder dass die Wiegefläche als Glasplatte ausgebildet ist. Um den Bedingungen der mechanischen Stabilität und der geringen Bauhöhe nachzukommen, kann z.B. eine Glaswaage verwendet werden, deren Wiegefläche mit Filamenten versehen wird. Beispielsweise auch, um eine samtartige Haptik zu erzeugen.

Bei einer besonderen Ausführung ist vorgesehen, dass die Waage eine Anzeigevorrichtung insbesondere eine selbstleuchtende Anzeigevorrichtung zur Anzeige eines Gewichtswertes aufweist. Diese kann vorteilhafter Weise in die Wiegefläche integriert sein und/oder unterhalb eines durchsichtigen Bereichs der Wiegefläche angeordnet sein.

Bei einer besonderen Ausführung ist vorgesehen, dass auf der Anzeigevorrichtung Filamente angeordnet sind. Unter anderem wird die Anzeigevorrichtung bzw. deren Sichtfenster hierdurch gegen Beschädigung und insbesondere Kratzer geschützt.

Diese können vorteilhafter Weise derart angeordnet sein, dass die Anzeigevorrichtung nicht sichtbar ist, wenn kein Gewichtswert angezeigt wird und dass die Anzeigevorrichtung sichtbar ist, wenn ein Gewichtswert angezeigt wird. Hierdurch werden der Kontrast und die Ablesbarkeit erhöht.

Es ist alternativ oder zusätzlich auch möglich, die Filamente derart auf der Anzeigevorrichtung anzuordnen, dass von der Anzeigevorrichtung angezeigte Werte zwischen den Filamenten hindurch sichtbar sind, wobei dies insbesondere dergestalt realisiert sein kann, dass die Anzeigevorrichtung selbst nicht sichtbar ist.

Insbesondere kann vorgesehen sein, dass der Ablesewinkel der Anzeigevorrichtung durch die Filamente eingeschränkt ist. Diese Ausführungsform hat den Vorteil, dass der räumliche Bereich der Privatsphäre des Benutzers verbessert ist, weil ausschließlich der Benutzer selbst, aber nicht eine daneben stehende Person die Anzeige ablesen kann.

Bei einer besonderen Ausführung ist vorgesehen, dass die freien Enden der auf der Anzeigevorrichtung angeordneten Filamente und die freien Enden der auf der Wiegefläche angeordneten Filamente stufenlos in einer gedachten ebenen Fläche oder einer gedachten gewölbten Fläche angeordnet sind. Hierdurch kann die Anzeigevorrichtung vorteilhafter Weise versteckt werden.

Bei einer besonderen Ausführung ist vorgesehen, dass zwischen den Filamenten ein Hauptpflegemittel, insbesondere eine Creme, deponierbar ist und/oder deponiert ist. Insbesondere kann vorgesehen sein, dass zwischen den Filamenten ein Pflegemittel und oder ein Medikament, insbesondere eine Creme, eine Hautcreme, ein Bakterienhemmer, Fungizid, eine Metallionenquelle oder ein Virenhemmer, derart deponierbar ist und/oder deponiert ist, dass dieses beim Betreten der Wiegefläche automatisch auf die Fußsohlen appliziert wird.

Alternativ oder zusätzlich kann vorgesehen sein, dass die Filamente und/oder der Kleber ein Pflegemittel und oder ein Medikament, insbesondere eine Creme, eine Hautcreme, ein Bakterienhemmer, Fungizid, eine Metallionenquelle oder ein Virenhemmer, beinhalten und/oder dass den Filamenten und/oder dem Kleber bei deren Herstellung ein Pflegemittel und oder ein Medikament beigemengt ist.

Bei einer besonderen Ausführung, die eine Analyse von orthopädischen Fußerkrankungen, wie Plattfuß, Senkfuß oder Spreizfuß erlaubt, ist vorgesehen, dass die Filamente derart ausgebildet und angeordnet sind, dass nach Entfernen des Wiegegutes von der Wiegefläche und/oder nach Verlassen der Wiegefläche - vorzugsweise reversibel - ein Abdruck verbleibt. Dies funktioniert besonders gut, wenn die Filamente länger als 1 mm sind. Besonders bei Erkrankungen des Fußes, bei denen ein Absinken der Fußgewölbe vorliegt, ist eine Analyse mit der erfindungsgemäßen Waage möglich. Die abgesunkenen Bereiche des Fußes biegen die Filamente beim Stehen auf der Waage mehr oder weniger stark um.

Die äußere Form (Größe) des Fußes begrenzt diese Bereiche. Damit diese so entstandene Struktur auch nach dem Absteigen von der Waage als visuelle Darstellung noch sichtbar ist, sind die Filamente derart ausgebildet, dass sie - zumindest für einen gewissen Zeitraum, der eine Untersuchung erlaubt, in der gebogenen Position verbleiben. Dies wird u.a. durch Filamente der Länge größer als 1 mm erreicht. Um die umgebogene Position noch länger zu halten, kann zusätzlich der Raum zwischen den Filamenten mit zähflüssigem Material wie z.B. einer Creme aufgefüllt werden. Die Filamente stellen sich unter anderem durch die erhöhte Reibung erst langsamer oder gar nicht mehr selbst auf. Der Fußabdruck kann so länger zur Analyse betrachtet werden.

Bei einer besonderen Ausführung, die BMI-Funktion (Body-Mass-Index Messung) oder BIA-Funktionen (Bioelektrische Impedanzanalyse) u.a. zur Fettanteilsbestimmung und/oder Muskelmasseanteilsbestimmung aufweisen, ist vorgesehen, dass zumindest ein Teil der Filamente leitfähig ausgebildet ist. Insbesondere kann vorgesehen sein, dass zumindest ein Teil der Filamente derart leitfähig ausgebildet ist, dass eine Impedanzmessung an einer zu untersuchenden Person ermöglicht ist. Demgemäß kann die Waage insbesondere als Fettmesswaage und/oder als Analysewaage ausgebildet sein.

Die Beflockung kann über ein Verfahren der elektrostatischen Aufladung der Filamente hergestellt werden. Hierzu werden beispielsweise zunächst die Wiegefläche und die sonstigen, zu beflockenden Oberflächen, mit einem Klebstoff bestrichen. Die elektrostatisch aufgeladenen Filamente werden dann mit einem elektrisch geladenen Stempel zunächst aus einem Vorrat aufgenommen, so dass sie sich gemäß ihrer Ladung hängend und parallel zueinander ausgerichtet an dem Stempel ansammeln. Die so gerichtet am Stempel hängenden Filamente können dann auf die Klebstoffschicht abgesenkt und mit den herunterhängenden Enden festgeklebt werden. Alternativ können sie auch zuvor in einen Klebstoff getaucht werden, so dass das Beschichten der Wiegefläche mit Klebstoff entfallen kann.

### Kurze Beschreibung der Zeichnungsfiguren

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:

Fig. 1 eine erfindungsgemäße Personenwaage in der Seitenansicht,

Fig. 2 die erfindungsgemäße Personenwaage von oben und

Fig. 3 eine andere erfindungsgemäße Personenwaage in der Seitenansicht.

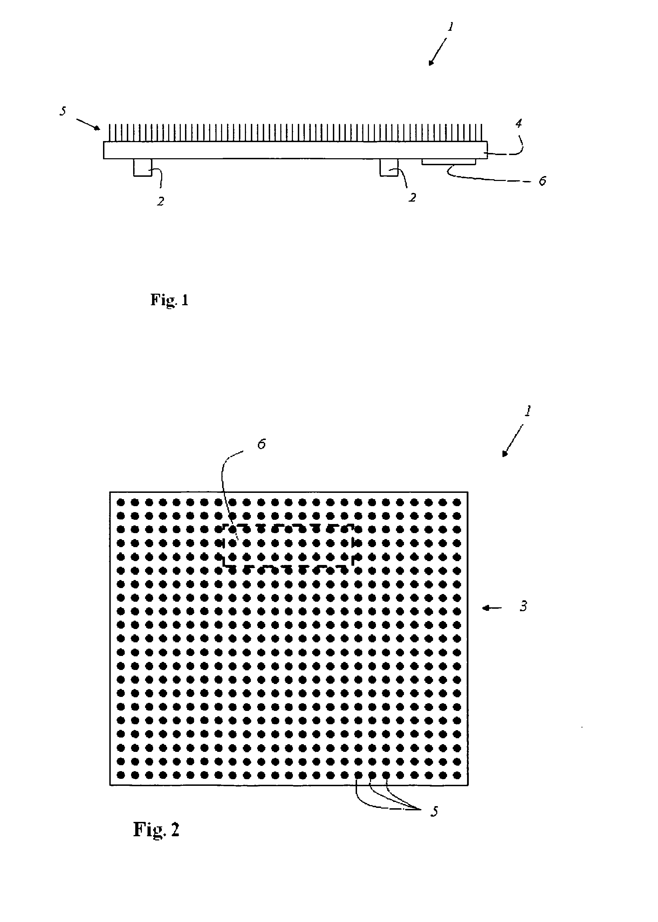

Fig. 1 zeigt ganz schematisch eine erfindungsgemäße Personenwaage 1 in der Seitenansicht. Die Personenwaage 1 weist eine auf Kraftaufnehmern 2 gelagerte Wiegefläche 3 auf. Die Wiegefläche weist eine Glasplatte 4 auf und ist mit senkrecht zur Wiegefläche aufgeklebten Filamenten 5 versehen. Die Dimensionen der Filamente und deren Anordnungsdichte sind der besseren Anschaulichkeit wegen nicht Maßstabsgetreu sondern rein schematisch dargestellt. Zur Erzielung einer harmonischen Anmutung der Personenwaage 1 sind die Filamente alle gleichlang, wodurch Hierdurch eine optisch einheitliche Gesamtoberfläche erscheint. An der Unterseite der Glasplatte 4 ist eine Anzeigevorrichtung 6 zur Anzeige von Messwerten angeordnet. Durch die Filamente auf der Oberseite der Glasplatte 4 im Bereich der Anzeigevorrichtung 6 wird der Sichtwinkel derart eingeschränkt, dass ausschließlich die auf der Personenwaage 1 stehende Person die Anzeigevorrichtung ablesen kann.

Fig. 2 zeigt die erfindungsgemäße Personenwaage 1 von oben. Die Anzeigevorrichtung 6 ist durch die Filamente derart versteckt, dass ausschließlich die selbstleuchtenden Zahlen dem Benutzer sichtbar werden.

### Beschreibung der Ausführungsarten

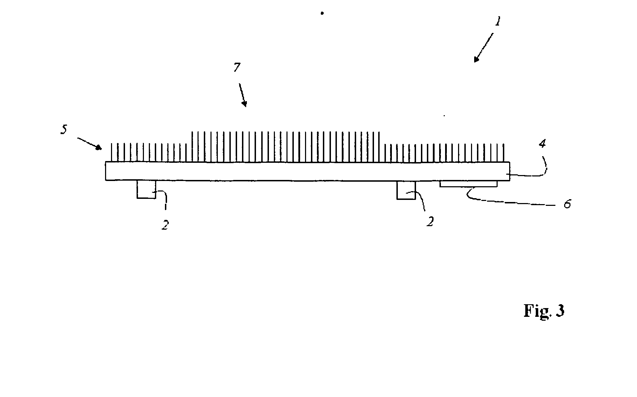

Fig. 3 zeigt eine andere erfindungsgemäße Personenwaage 1. Diese Personenwaage 1 weist zwei Filament- Bereiche 7 auf, in denen die Filamente 5 länger und leitfähig ausgebildet sind. Auf diese Weise erkennt er Benutzer die vorgesehene Sollstandposition und darüber hinaus ist eine Bioimpedanzmessung ermöglicht, was im Einzelnen nicht dargestellt ist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Liste der Bezugszeichen

1. Personenwaage
2. Kraftaufnehmer
3. Wiegefläche
4. Glasplatte
5. Filamente
6. Anzeigevorrichtung
7. Filament- Bereiche

## Patentansprüche

1. Waage, insbesondere als Küchen-, Brief- oder Personenwaage (1), mit einem eine Auswerteelektronik, insbesondere Kraftaufnehmer (2) umfassenden Waagenunterbau und einer auf dem Waagenunterbau angeordneten, die zu wiegende Last aufnehmenden plattenartigen Wiegefläche (3), wobei der Waagenunterbau und die Wiegefläche (3) derart ausgebildet sind, dass das aufliegende Gewicht bestimmbar ist, **dadurch gekennzeichnet, dass** die Wiegefläche (3) unmittelbar mit im Winkel zur Oberfläche der Wiegefläche (3) angeordneten Filamenten (5) versehen ist, wobei die Filamente (5) mit einem freien Ende auf die Wiegefläche (3) aufgeklebt sind und in einem Winkel zur Wiegefläche (3) abstehen.

2. Waage nach einem der beiden vorherigen Ansprüche, **dadurch gekennzeichnet, dass** die Filamente (5) eine Länge im Bereich von 0,2 mm und 10 mm, insbesondere im Bereich von 0,2 mm bis 5 mm, insbesondere im Bereich von 0,5 mm bis 1,5 mm, aufweisen.

3. Waage nach einem der vorhergehenden Ansprüche, **dadurch gekennzeichnet, dass** die Wiegefläche (3) zumindest einen Bereich, in dem die Filamente (5) gleichlang sind und/oder zumindest einen Bereich, in dem die Filamente (5) unterschiedlich lang sind, aufweist.

4. Waage nach einem der vorhergehenden Ansprüche, **dadurch gekennzeichnet, dass** die Filamente (5) einen Durchmesser im Bereich von 2 Mikrometer bis 50 Mikrometer, insbesondere im Bereich von 5 Mikrometer bis 20 Mikrometer aufweisen.

5. Waage nach einem der vorhergehenden Ansprüche, **dadurch gekennzeichnet, dass** die Filamente (5) auf der Wiegefläche (3) pro Millimeter Filamentlänge eine Massendichte im Bereich von 50 g/m² und 500 g/m², insbesondere von 150 g/m² aufweist.

6. Waage nach einem der vorhergehenden Ansprüche, **dadurch gekennzeichnet, dass** die Filamente (5) in unterschiedlichen Bereichen (7) der Wiegefläche (3) mit unterschiedlichen Winkeln von der Wiegefläche (3) abstehen.

7. Waage nach einem der vorhergehenden Ansprüche, **dadurch gekennzeichnet, dass** zumindest ein Teil der Filamente (5) senkrecht zur Wiegefläche (3) abstehen.

8. Waage nach einem der vorhergehenden Ansprüche, **dadurch gekennzeichnet, dass** die Filamente (5) in unterschiedlichen Bereichen (7) der Wiegefläche (3) unterschiedliche Durchmesser und/oder unterschiedliche Längen aufweisen und/oder in unterschiedlichen Bereichen (7) der Wiegefläche (3) unterschiedlich dicht angeordnet sind.

9. Waage nach einem der vorhergehenden Ansprüche, **dadurch gekennzeichnet, dass** die Filamente (5) Kunstfasern sind und/oder dass die Filamente (5) aus Polyamid hergestellt sind und/oder dass die Filamente (5) aus Polyester hergestellt sind und/oder dass die Filamente (5) als Glasfasern ausgebildet sind.

10. Waage nach einem der vorhergehenden Ansprüche, **dadurch gekennzeichnet, dass** die Wiegefläche (3) aus Glas besteht und/oder dass die Wiegefläche als Glasplatte (4) ausgebildet ist.

11. Waage nach einem der vorhergehenden Ansprüche, **dadurch gekennzeichnet, dass** die Waage eine Anzeigevorrichtung (6) und/oder eine selbstleuchtende Anzeigevorrichtung (6) zur Anzeige eines Gewichtswertes aufweist und die Anzeigevorrichtung (6) in die Wiegefläche (3) integriert ist und/oder unterhalb eines durchsichtigen Bereichs der Wiegefläche (3) angeordnet ist, wobei auf der Anzeigevorrichtung (6) Filamente (5) angeordnet sind und die Filamente (5) insbesondere derart auf der Anzeigevorrichtung (6) angeordnet sein können, dass die Anzeigevorrichtung (6) nicht sichtbar ist, wenn kein Gewichtswert angezeigt wird und dass die Anzeigevorrichtung (6) sichtbar ist, wenn ein Gewichtswert angezeigt wird.

12. Waage nach einem der vorhergehenden Ansprüche, **dadurch gekennzeichnet, dass** Filamente (5) insbesondere hinsichtlich der Länge und Dichte derart auf der Anzeigevorrichtung (6) angeordnet sind, dass von der Anzeigevorrichtung (6) angezeigte Werte zwischen den Filamenten (5) hindurch sichtbar sind.

13. Waage nach einem der vorhergehenden Ansprüche, **dadurch gekennzeichnet, dass** die freien Enden der auf der Anzeigevorrichtung (6) angeordneten Filamente (5) und die freien Enden der auf der Wiegefläche (3) angeordneten Filamente (5) stufenlos in einer gedachten ebenen Fläche oder einer gedachten gewölbten Fläche angeordnet sind.

14. Waage nach einem der vorhergehenden Ansprüche, **dadurch gekennzeichnet, dass** sie als Personenwaage (1) ausgebildet ist und zwischen den Filamenten (5) ein Pflegemittel und oder ein Medikament, insbesondere eine Creme, eine Hautcreme, ein Bakterienhemmer, Fungizid, eine Metallionenquelle oder ein Virenhemmer, derart deponierbar ist und/oder deponiert ist, dass dieses beim Betreten der Wiegefläche (3) automatisch auf die Fußsohlen appliziert wird.

15. Waage nach einem der vorhergehenden Ansprüche, **dadurch gekennzeichnet, dass** zumindest ein Teil der Filamente (5) insbesondere zur Impedanzmessung an einer zu untersuchenden Person elektrisch leitfähig ausgebildet ist.

## Claims

1. Scales, in particular kitchen, mail or bathroom scales (1), having a scales substructure comprising an electronic evaluation unit, in particular a force transducer (2), and a plate-like weighing surface (3) holding the load to be weighted and arranged on the scales substructure, wherein the scales substructure and the weighing surface (3) are configured in such a manner that the bearing weight can be determined, **characterized in that** the weighing surface (3) is directly provided with filaments (5) arranged at an angle to the surface of the weighing surface (3), wherein the filaments (5) are adhered by a free end to the weighing surface (3) and project at an angle to the weighing surface (3).

2. Scales according to one of the two preceding claims, **characterized in that** the filaments (5) exhibit a length in the region of 0.2 mm and 10 mm, particularly in the region of 0.2 mm to 5 mm, particularly in the region of 0.5 mm to 1.5 mm.

3. Scales according to one of the preceding claims, **characterized in that** the weighing surface (3) exhibits at least one region in which the filaments (5) are of equal length and/or at least one region in which the filaments (5) are of different lengths.

4. Scales according to one of the preceding claims, **characterized in that** the filaments (5) exhibit a diameter in the region of 2 micrometres to 50 micrometres, particularly in the region of 5 micrometres to 20 micrometres.

5. Scales according to one of the preceding claims, **characterized in that** the filaments (5) on the weighing surface (3) exhibit a mass density per millimetre filament length in the region of 50 g/m² and 500 g/m², particularly of 150 g/m².

6. Scales according to one of the preceding claims, **characterized in that** the filaments (5) project in different regions (7) of the weighing surface (3) at different angles to the weighing surface (3).

7. Scales according to one of the preceding claims, **characterized in that** at least some of the filaments (5) project at right angles to the weighing surface (3).

8. Scales according to one of the preceding claims, **characterized in that** the filaments (5) in different regions (7) of the weighing surface (3) exhibit different diameters and/or different lengths and/or are arranged in varying densities in different regions (7) of the weighing surface (3).

9. Scales according to one of the preceding claims, **characterized in that** the filaments (5) are synthetic fibres and/or the filaments (5) are made of polyamide and/or that the filaments (5) are made of polyester and/or that the filaments (5) are made of glass fibres.

10. Scales according to one of the preceding claims, **characterized in that** the weighing surface (3) is made of glass and/or that the weighing surface is configured as a glass plate (4).

11. Scales according to one of the preceding claims, **characterized in that** the scales exhibit a display device (6) and/or a luminous display device (6) for displaying a weight value and the display device (6) is integrated in the weighing surface (3) and/or is arranged beneath a transparent region of the weighing surface (3), wherein filaments (5) are arranged on the display device (6) and the filaments (5) can be particularly arranged on the display device (6) in such a manner that the display device (6) is not visible when no weight value is displayed and that the display device (6) is visible when a weight value is displayed.

12. Scales according to one of the preceding claims, **characterized in that** filaments (5) are arranged in such a manner, particularly in terms of their length and density, on the display device (6) that values displayed by the display device (6) are visible between the filaments (5).

13. Scales according to one of the preceding claims, **characterized in that** the free ends of the filaments (5) arranged on the display device (6) and the free ends of the filaments (5) arranged on the weighing surface (3) are arranged in an infinitely variable manner in an imaginary planar surface or an imaginary arched surface.

14. Scales according to one of the preceding claims, **characterized in that** they are configured as bathroom scales (1) and between the filaments (5) a care product or a pharmaceutical, in particular a cream, skin cream, anti-bacterial, fungicide, metal-ion source or anti-viral can be deposited and/or is deposited in such a manner that they are automatically applied to the soles of the feet when the weighing surface (3) is stepped onto.

15. Scales according to one of the preceding claims, **characterized in that** at least some of the filaments (5) are particularly configured in an electro-conductive manner for impedance measurement on a person being examined.

## Revendications

1. Balance, utilisée notamment comme balance de cuisine, pèse-lettre et pèse-personne (1) avec une base de balance comprenant une unité d'évaluation électronique, en particulier un capteur de force (2), et une surface de pesage (3) en forme de plaque disposée sur la base de la balance et destinée à la réception de charges à peser, la base de la balance et la surface de pesage (3) étant formées de telle manière que le poids posé dessus peut être déterminé, **caractérisée en ce que** la surface de pesage (3) est dotée de filaments (5) disposés directement dans l'angle par rapport à la surface de la surface de pesage (3), lesdits filaments (5) étant collés sur la surface de pesage (3) avec une extrémité libre et faisant saillie dans un angle par rapport à la surface de pesage (3).

2. Balance selon l'une des deux revendications précédentes, **caractérisée en ce que** les filaments (5) présentent une longueur de plage comprise entre 0,2 mm et 10 mm, notamment une plage de 0,2 mm à 5 mm, notamment une plage de 0,5 mm à 1,5 mm.

3. Balance selon l'une des revendications précédentes, **caractérisée en ce que** la surface de pesage (3) présente au moins une plage dans laquelle les filaments (5) sont de même longueur et/ou une plage dans laquelle les filaments (5) sont de longueur différente.

4. Balance selon l'une des revendications précédentes, **caractérisée en ce que** les filaments (5) présentent un diamètre dans la plage de 2 micromètres à 50 micromètres, notamment dans la plage de 5 micromètres à 20 micromètres.

5. Balance selon l'une des revendications précédentes, **caractérisée en ce que** les filaments (5) présentent sur la surface de pesage (3) une masse volumique par millimètre de longueur de filament dans une plage de 50 g/m² et 500 g/m², notamment de 150 g/m².

6. Balance selon l'une des revendications précédentes, **caractérisée en ce que** les filaments (5) font saillie dans différentes plages (7) de la surface de pesage (3) avec différents angles de ladite surface de pesage (3).

7. Balance selon l'une des revendications précédentes, **caractérisée en ce qu'**au moins une partie des filaments (5) soit en saillie à la perpendiculaire par rapport à la surface de pesage (3).

8. Balance selon l'une des revendications précédentes, **caractérisée en ce que** les filaments (5) présentent des diamètres différents et/ou longueurs différentes dans des plages (7) différentes de la surface de pesage (3) et/ou sont disposés à différentes densités dans des plages (7) différentes de la surface de pesage (3).

9. Balance selon l'une des revendications précédentes, **caractérisée en ce que** les filaments (5) sont des fils en matières plastiques et/ou les filaments (5) sont fabriqués en polyamide et/ou les filaments (5) sont fabriqués en polyester et/ou les filaments (5) sont formés de fibres de verre.

10. Balance selon l'une des revendications précédentes, **caractérisée en ce que** la surface de pesage (3) se compose de verre et/ou que la surface de pesage se présente sous forme de plaque en verre (4).

11. Balance selon l'une des revendications précédentes, **caractérisée en ce que** la balance présente un dispositif d'affichage (6) et/ou un dispositif d'affichage (6) autolumineux pour l'affichage d'une valeur pondérale, et ledit dispositif d'affichage (6) est intégré dans la surface de pesage (3) et/ou disposé un dessous d'une plage transparente de ladite surface de pesage (3), des filaments (5) étant disposés sur ledit dispositif d'affichage (6), et les filaments (5) notamment ceux pouvant être disposés sur le dispositif d'affichage (6), de sorte que le dispositif d'affichage (6) soit invisible lorsqu'aucune valeur pondérale n'est affichée et que ledit dispositif d'affichage (6) soit visible lorsqu'une valeur pondérale est affichée.

12. Balance selon l'une des revendications précédentes, **caractérisée en ce que** les filaments (5), notamment en ce qui concerne la longueur et la densité, sont disposés sur le dispositif d'affichage (6) de telle sorte que les valeurs affichées sont visibles par transparence du dispositif d'affichage (6) entre les filaments (5).

13. Balance selon l'une des revendications précédentes, **caractérisée en ce que** les extrémités libres des filaments (5) disposés sur le dispositif d'affichage (6) et les extrémités libres desdits filaments (5) disposés sur la surface de pesage (3) sont disposés en continu sur une surface plane imaginaire ou une surface bombée imaginaire.

14. Balance selon l'une des revendications précédentes, **caractérisée en ce qu'**elle est conçue comme un pèse-personne (1) et qu'entre les filaments (5) un soin et/ou un médicament, tel une crème, une lotion, un inhibiteur bactérien, un fongicide, une source d'ions ou un inhibiteur de virus, peut être déposé et/ou est déposé de telle sorte qu'il soit appliqué automatiquement sur la plante des pieds en montant sur la surface de pesage (3).

15. Balance selon l'une des revendications précédentes, **caractérisée en ce qu'**au moins une partie des filaments (5), notamment pour la mesure d'impédance sur une personne à examiner, soit conçue pour être électroconductrice.
